# EUROPÄISCHE PATENTSCHRIFT

(11) **EP 2 221 679 B1**
(45) Veröffentlichungstag und Bekanntmachung des Hinweises auf die Patenterteilung: **06.06.2012**
(21) Anmeldenummer: 09001919.1
(22) Anmeldetag: 11.02.2009
(51) Int. Cl.: G05B 9/02

(54) **Verfahren zur logischen Verschaltung von Sicherheitskreisen in einer industriellen Automatisierungsordnung und Projektierungseinrichtung zur Durchführung des Verfahrens**
Method for logically connecting safety circuits in an industrial automation assembly and device for planning and carrying out this method
Procédé de liaison logique de circuits de sécurité dans un agencement d'automatisation industriel et dispositif de conception destiné à l'exécution du procédé

(43) Veröffentlichungstag der Anmeldung: 25.08.2010
(73) Patentinhaber: Siemens Aktiengesellschaft, 80333 München (DE)
(72) Erfinder: Gebuhr, Harald, 90409 Nürnberg (DE); Schlosser, Michael, 91126 Schwabach (DE); Zühlsdorf, Sören, 90419 Nürnberg (DE)

(56) Entgegenhaltungen:
- EP-A1- 1 950 639
- DE-A1- 10 208 866
- DANIEL DUPONT ET AL: "Sources of Mistakes in PFD Calculations for Safety-Related Loop Typicals" ELECTRICAL AND INSTRUMENTATION APPLICATIONS IN THE PETROLEUM&CHEMI CAL INDUSTRY, 2007. PCIC EUROPE 2007. 4TH EUROPEAN CONFERENCE ON, IEEE, PI, 1. Juni 2007 (2007-06-01), Seiten 1-8, XP031151145 ISBN: 978-3-9523333-0-3

## Beschreibung

Die Erfindung betrifft ein Verfahren zur logischen Verschaltung von zumindest zwei Sicherheitskreisen bzw. Sicherheitsbereichen in einer industriellen Automatisierungsanordnung gemäß Patentanspruch 1 und eine Projektierungseinrichtung für eine industrielle Automatisierungsanordnung gemäß dem Patentanspruch 9.

In industriellen Automatisierungsanordnungen ist regelmäßig eine Vielzahl von (zumeist elektrischen) Betriebsmitteln angeordnet, die durch Automatisierungskomponenten gesteuert werden. Von den Betriebsmitteln bzw. den damit betriebenen technischen Einrichtungen kann eine Vielzahl von Gefahren ausgehen. So können beispielsweise Personen von sich drehenden oder sich bewegenden Teilen erfasst und verletzt werden; elektrische Spannungen können Stromschläge verursachen; Rohrleitungen können bei zu hohem Druck bersten etc.. Aus diesem Grund ist es üblich, alle Betriebsmittel, von denen eine Gefahr ausgehen könnte, mit Sicherungsmaßnahmen zu versehen. Dies bedeutet zumeist, dass die betreffenden Betriebsmittel bei Gefahr automatisch oder manuell abgeschaltet werden. Die manuelle Abschaltung findet zumeist über sog. "Not-Halt-Schalter" (auch Not-Halt-Taster genannt) statt. Die automatische Abschaltung von Betriebsmitteln verwendet beispielsweise Lichtschranken oder Türkontakte oder auch Messungen von analogen Prozessgrößen, die dafür sorgen, dass bei der Annäherung einer Person an ein sich bewegendes Maschinenteil die Bewegung angehalten wird (beispielsweise durch Abschalten eines Motors) bzw. ein Prozess in den sicheren Zustand gebracht wird (beispielsweise durch Öffnen eines Überdruckventils bei Überdruck) oder dgl.. Die Kombination aus einem Abschaltmittel (beispielsweise Not-Halt-Schalter oder Lichtschranke) und dem jeweiligen Betriebsmittel (Motor, Stromkreis, etc.) wird dabei Sicherheitskreis oder Safety Instrumented Function (SIF) genannt.

Sicherheitskreise können dabei auch ineinander verschachtelt sein, d.h., dass einem untergeordneten Sicherheitskreis (beispielsweise aus Not-Aus-Schalter und einem Betriebsmittel bestehend) ein übergeordneter Sicherheitskreis überlagert ist, wobei regelmäßig der übergeordnete Sicherheitskreis einer Vielzahl von untergeordneten Sicherheitskreisen überlagert ist. So kann beispielsweise eine Produktionshalle mit einem Brandmeldesystem ausgestattet sein, wobei im Fall eines Brandes alle in der Halle befindlichen Maschinen und Anlagen, die jeweils eigene Sicherheitskreise aufweisen, abgeschaltet werden. Somit ist die Brandmeldeanlage Bestandteil eines übergeordneten Sicherheitskreises, wobei der Status "Brand" auslösende Bedingung ("cause") für den Vorgang des Abschaltens ist, der als "effect" an die untergeordneten Sicherheitskreise weitergegeben wird, wobei dieser "effect" des übergeordneten Sicherheitskreises als "cause" der untergeordneten Sicherheitskreise wirkt.

Bei der Projektierung von industriellen Automatisierungsanordnungen werden die Sicherheitskreise der Betriebsmittel meist parallel dazu projektiert. Aufgrund der Komplexität vieler industrieller Automatisierungsanordnungen sind dabei die Ursachen und Wirkungen ("cause" und "effect") der verschiedenen Sicherheitskreise erheblich miteinander verknüpft. Die Projektierung eines Sicherheitskonzeptes für eine solche komplexe industrielle Automatisierungsanordnung ist daher insgesamt ein komplexer Vorgang, wobei auch der häufig erforderliche Nachweis für ein funktionierendes Sicherheitskonzept aufgrund der Unübersichtlichkeit oft nur schwer darzustellen ist.

Es kommt also in größeren, sicherheitsgerichteten Automatisierungsprojekten aufgrund der Vielzahl an Betriebsmitteln, die überwacht werden müssen, oft zu dem Problem, das Zusammenhänge nicht mehr klar nachvollziehbar dargestellt werden können. Die Projektierung des Sicherheitskonzepts wird also mangels Übersichtlichkeit erschwert. Dabei werden die Sicherheitskreise in kleine Abschaltgruppen, sog. "Insellösungen", unterteilt und derart projektiert und abgenommen (durch Behörden, TÜV o.ä.). D.h., dass derzeit ein größeres sicherheitsgerichtetes Projekt aus vielen kleinen Programmen besteht, die jeweils Sicherheitskreise repräsentieren und die über manuell projektierte Querkommunikation verbunden werden müssen.

DANIEL DUPONT ET AL: "Sources of Mistakes in PFD Calculations for Safety-Related Loop Typicals" ELECTRICAL AND INSTRUMENTATION APPLICATIONS IN THE PETROLEUM&CHEMICAL INDUSTRY, 2007. PCIC EUROPE 2007. 4TH EUROPEAN CONFERENCE ON, IEEE, PI, 1. Juni 2007 (2007-06-01), Seiten 1-8, XP031151145 ISBN:978-3-9523333-0-3

Deschreibt ein Verfahren zur Projektierung von Schutztreisen in einer industrillen Automatisierungsanordnung.

Es ist daher eine Aufgabe der vorliegenden Erfindung, die Projektierung der Verschaltung von Sicherheitskreisen in industriellen Automatisierungsanordnungen zu vereinfachen und darüber hinaus auf einfache Weise zu einer übersichtlichen Darstellung der Sicherheitskreise zu gelangen.

Die Aufgabe wird durch ein Verfahren gemäß dem Patentanspruch 1 und durch eine Projektierungseinrichtung gemäß dem Patentanspruch 9 gelöst.

Die Lösung der Aufgabe sieht dabei ein Verfahren zur logischen Verschaltung von zumindest zwei Sicherheitskreisen in einer industriellen Automatisierungsanordnung vor, wobei ein untergeordneter der Sicherheitskreise und ein übergeordneter der Sicherheitskreise jeweils in einer Sicherheitsmatrix beschrieben werden. Dabei wird aus den Sicherheitsmatrizen des untergeordneten und des übergeordneten Sicherheitskreises eine Gesamtmatrix generiert, wobei die Gesamtmatrix die Verschaltung der Sicherheitskreise angibt.

Die Lösung der Aufgabe sieht außerdem eine Projektierungseinrichtung für eine industrielle Automatisierungsanordnung vor, wobei die Projektierungseinrichtung zur teil- oder vollautomatisierten Durchführung eines des vorgenannten Verfahrens eingerichtet ist.

Durch das vorgenannte Verfahren bzw. die vorgenannte Projektierungseinrichtung brauchen bei einer gegebenen Automatisierungsanordnung mit einer gegebenen Hierarchie der Betriebsmittel lediglich die Sicherheitskreise der einzelnen Betriebsmitteln in Form von relativ kleinen Sicherheitsmatrizen projektiert werden, wobei die Gesamtmatrix mit den Abhängigkeiten der einzelnen Sicherheitskreise weitgehend automatisch generiert werden kann. Dabei gibt die Gesamtmatrix in übersichtlicher Weise das Sicherheitskonzept, also die Verschaltung der verschiedenen Sicherheitskreise miteinander, an und kann außerdem zur leichten Bearbeitung der Abhängigkeiten verwendet werden.

Vorteilhafte Ausgestaltungen des erfindungsgemäßen Verfahrens sind in den abhängigen Patentansprüchen angegeben. Die dabei beschriebenen Merkmale und Vorteile gelten sinngemäß auch für die erfindungsgemäße Projektierungseinrichtung.

Die Generierung der Gesamtmatrix kann leicht automatisiert werden, wenn zur Generierung der Gesamtmatrix die Sicherheitsmatrix des untergeordneten Sicherheitskreises zusammen mit den in diesen enthaltenen Verknüpfungen in die Sicherheitsmatrix des übergeordneten Sicherheitskreises eingefügt wird. Zur Differenzierung zwischen unter- und übergeordneten Sicherheitskreisen sind die Sicherheitskreise vorteilhafter Weise in einer Projektbeschreibung der industriellen Automatisierungsanordnung verzeichnet, wobei die Hierarchie der Sicherheitskreise und die Hierarchie der diesen zugeordneten Sicherheitsmatrizen aus einer Ressourcen- und/oder einer Gruppenhierarchie in der Projektbeschreibung der industriellen Automatisierungsanordnung ausgelesen wird. Dabei können ohnehin vorhandene Informationen leicht weiter verwendet werden, wenn als die Projektbeschreibung eine Darstellung der industriellen Automatisierungsanordnung in Form einer Baumstruktur verwendet wird.

Die automatische Verarbeitung der einzelnen Sicherheitsmatrizen wird erleichtert, indem für jede der Sicherheitsmatrizen ein mit einer Auslösebedingung ("cause") verknüpfter Effekt ("effect") definiert wird, wobei in der Gesamtmatrix jeweils der Effekt einer ursprünglich übergeordneten Sicherheitsmatrix als auslösendes Ereignis auf eine dieser untergeordneten Sicherheitsmatrix wirkt. Selbstverständlich kann dabei auch ein Effekt einer übergeordneten Sicherheitsmatrix als auslösendes Ereignis auf eine Vielzahl von untergeordneten Sicherheitsmatrizen wirken. Weiterhin können in der Gesamtmatrix auch zusätzliche Verknüpfungen zwischen ursprünglich einzelnen Sicherheitsmatrizen eingefügt werden, die nicht das Resultat einer hierarchischen Abhängigkeit innerhalb der ursprünglich projektierten industriellen Automatisierungsanordnung sind. Weiter können auch - meist manuell - automatisch erzeugte Verknüpfungen, die ein Resultat der hierarchischen Anordnung der Betriebsmittel darstellen, aus der Gesamtmatrix entfernt werden, um unerwünschte Abhängigkeiten zu entfernen.

Die erzeugte Gesamtmatrix kann vorteilhaft mehrfach verwendet werden, nämlich zum Einen zur Erzeugung eines sicherheitsgerichteten Programms für die industrielle Automatisierungsanordnung, und zum Anderen zur Darstellung der sicherheitstechnischen Abhängigkeiten in der industriellen Automatisierungsanordnung. Letztere Darstellung kann auch zum Nachweis des Sicherheitskonzepts bei einer technischen Abnahme durch Behörden o.ä. verwendet werden.

Eine besonders einfache Übernahme der Informationen aus der projektierten Automatisierungsanordnung wird erleichtert, indem die zur Generierung der Gesamtmatrix und zur Weiterverarbeitung der Gesamtmatrix verwendeten technischen Einrichtungen als Software-Komponente eines Programmiergerätes oder eines Projektierungs-Tools der industriellen Automatisierungsanordnung ausgebildet sind.

Eine generierte Hilfslogik erleichtert die Lesbarkeit der Gesamtmatrix und kann für Dokumentationszwecke genutzt werden. Der notwendige und laufzeit- bzw. speicheroptimale Code wird ohne die generierte Hilfslogik kompiliert. Die generierte Hilfslogik setzt sich aus den Spalten zusammen, die als "effect" lediglich Stellvertreter für Hierarchieebenen enthalten.

Ein Ausführungsbeispiel des erfindungsgemäßen Verfahrens wird nachfolgend anhand der Zeichnungen beschrieben. Es dient gleichzeitig zur Erläuterung einer erfindungsgemäßen Projektierungseinrichtung.

Dabei zeigen:
Figur 1 in schematischer Darstellung in Form einer Baum- struktur sicherheitsrelevante Komponenten einer in- dustriellen Automatisierungsanordnung,
Figur 2 ein exemplarisches Anlagen-Layout für die Sicher- heitskreise eines Teils der industriellen Automati- sierungsanordnung, bestehend aus den Sicherheits- kreisen:

| | | |
|---|---|---|
| • | Anlagenebene | (A-E) |
| • | Not-Aus-Ebene | (N-A-E) |
| • | Schutzkreisebene | (SK-E) |
| • | Einlegestellen-Ebene | (ES-E) |
| • | Aggregate-Ebene | (AG-E) |
| • | Aktoren-Ebene | (AK-E), |

Figur 3 die Generierung einer Gesamtmatrix aus drei einzel- nen Sicherheitsmatrizen, und
Figur 4 die generierte Gesamtmatrix.

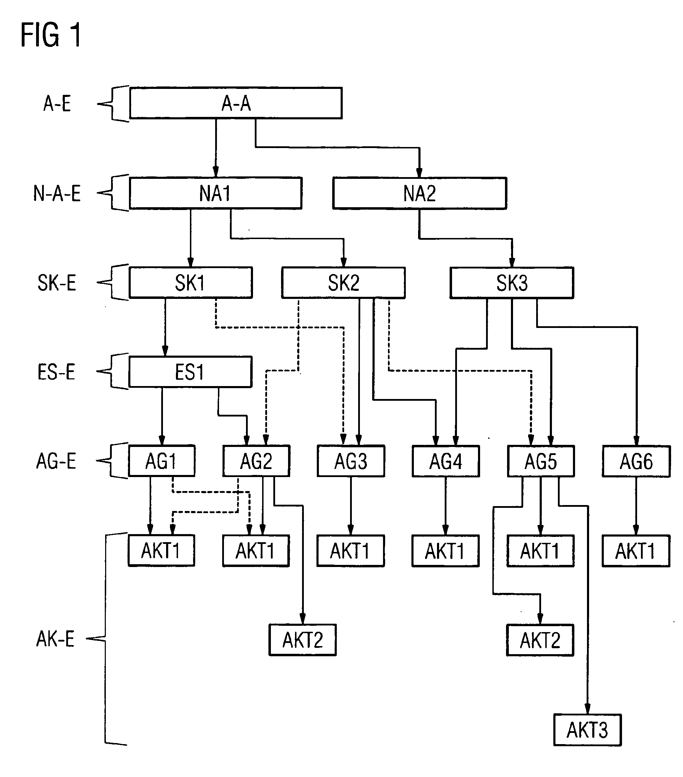

In der Figur 1 sind schematisch in Form einer Baumstruktur die sicherheitsrelevanten Abhängigkeiten in einer industriellen Automatisierungsanordnung dargestellt. Dabei ist unter der hierarchisch obersten Ebene, der Anlagenebene A-E, die gesamte Automatisierungsanordnung A-A angeordnet. In der Ebene darunter, der Not-Aus-Ebene N-A-E, sind die Not-Aus-Kreise NA1, NA2 angeordnet. Dieser Ebene unterlagert ist die Schutzkreis-Ebene SK-E. Darin sind die Schutzkreise SK1, SK2, SK3 angeordnet. Dieser Ebene unterlagert ist Einlegestellen-Ebene ES-E mit der Einlegestelle ES1. In der nächsten Ebene, der Aggregate-Ebene AG-E, sind als die Betriebsmittel der Automatisierungsanordnung die Aggregate AG1, ..., AG6 angeordnet. Schließlich ist als unterste Hierarchie-Ebene die Aktoren-Ebene AK-E dargestellt, in der die Aktoren AKT1, AKT2, AKT3 angeordnet sind. Die Anzahl der durchlaufenen Hierarchieebenen in der Abschaltkette ist unabhängig von der Anzahl der Hierarchieebenen der Anlage. Fehlt beispielsweise in der Abschaltkette zu AG4 der Sicherheitskreis Einlegestelle, dann wirkt sich der Sicherheitskreis SK2 direkt aus.

In der dargestellten Baumstruktur gibt in jeder Hierarchie-Ebene jedes Element in jedem Ast des Baumes seinen "effect" an die jeweils unterlagerte Ebene weiter. Dies bedeutet zum Beispiel, dass bei Aktivierung des Not-Aus-Kreis NA1, also bei Betätigung des entsprechenden Not-Halt-Tasters, die diesem unterlagerten Schutzkreise SK1, SK2 ausgelöst werden, was in diesem Beispiel bedeutet, dass die Geräte, Anlagen und Komponenten, die zu den Schutzkreisen SK1, SK2 gehören, in einen sicheren Betriebszustand versetzt werden, also beispielsweise abgeschaltet werden. Es gilt also, dass der "effect", also die "Wirkung", der Not-Aus-Ebene N-A-E als "cause", also als "Auslösebedingung", an die untergeordnete Hierarchie-Ebene weitergegeben wird. Diese Bedingungen sind in der Figur 1 als Pfeile dargestellt. Eine solche Ursache-Wirkungs-Kette innerhalb eines Zweiges oder Astes der Baumstruktur wird auch als "Vater-Sohn-Beziehung" bezeichnet. Diese Beziehungen ergeben sich aus der Projektierung der Automatisierungsanordnung automatisch, so dass logische Beziehungen zwischen Komponenten der Automatisierungsanordnung, die bei der Projektierung der Automatisierungsanordnung festgelegt werden, automatisch in Abhängigkeiten des Sicherheits-Projektes überführt werden können. Das geschieht mit einem Programmiergerät ("Engineering-Tool"), welches durch eine geeignete Projektierungssoftware, die mit einem entsprechenden Plug-In, also einer zusätzlichen Software-Komponente, mit dieser Funktionalität versehen ist, arbeitet.

Über die "Vater-Sohn-Beziehungen" hinausgehende Abhängigkeiten, die nicht aus der Projektierung der Automatisierungsanordnung als solcher abgelesen werden können, sind in der Figur 1 durch gestrichelte Pfeile dargestellt. Diese Abhängigkeiten werden auch als "Onkel-Neffe-Beziehungen" bezeichnet. Sie werden manuell projektiert. Ebenso können nicht erwünschte Abhängigkeiten, die auf automatischem Wege von der projektierten Automatisierungsanordnung in das Sicherheitskonzept übernommen wurden, manuell gelöscht werden. Für die Darstellung der Figur 1 würde das bedeuten, dass entsprechende Pfeile entfernt werden. Ebenso ist es eine festgelegte Konvention, dass zwar eine überlagerte Ebene eine untergelagerte Ebene abschalten kann bzw. sogar abschalten soll (im Fehlerfall), aber umgekehrt nicht die Abschaltung einer untergelagerten Ebene zur automatischen Abschaltung der überlagerten Ebene und damit im Zweifel der gesamten Automatisierungsanordnung führen darf.

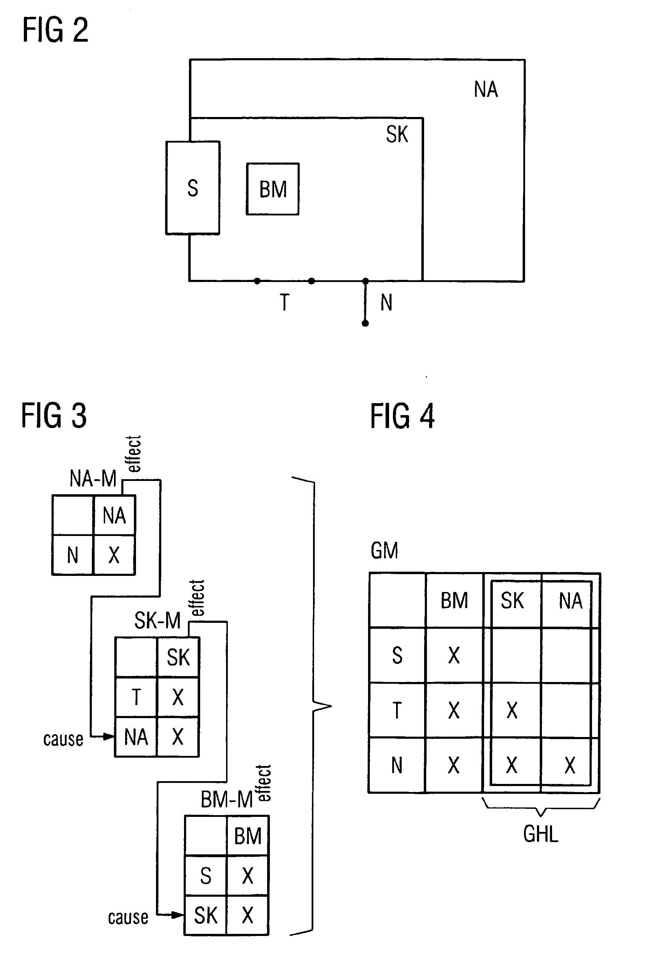

In der Figur 2 ist zur besseren Erläuterung das Layout einer einfachen Anlage dargestellt. Ein Betriebsmittel BM, beispielsweise eine Werkzeugmaschine, ist in einem Schutzkreis SK eingebettet, wobei ein Scanner S (beispielsweise ein sog. "Lichtvorhang") vorgesehen ist, dessen Auslösung bedeutet, dass sich ein Mensch der Werkzeugmaschine nähert und in Gefahr gerät, so dass die Maschine abzuschalten ist. Ein weiteres Sicherheitselement ist ein Kontakt an einer Zugangstür T, wobei ein Öffnen der Tür ebenfalls dazu führen soll, dass das Betriebsmittel BM abgeschaltet wird. Weiter ist ein Not-Halt-Taster N vorgesehen, mit dem das Betriebsmittel BM manuell abgeschaltet werden kann. Der Not-Halt-Taster N ist dabei logisch dem Not-Aus-Kreis NA zugeordnet.

Die aus dem Layout der Figur 2 resultierenden einzelnen Sicherheitsmatrizen sind in der Figur 3 dargestellt. Die an oberster Stelle dargestellte Sicherheitsmatrix NA-M (Not-Aus-Kreis) enthält dabei eine Zeile mit einer Abschaltbedingung, wobei in der ersten Spalte die Bezeichnung "N" den Not-Halt-Taster bezeichnet, und wobei das in der nächsten Spalte angeordnete "X" bedeutet, dass eine Betätigung des Not-Halt-Tasters N eine Abschaltbedingung für die Sicherheitsmatrix NA-M darstellt. Die nächste Sicherheitsmatrix SK-M repräsentiert den Schutzkreis SK aus der Figur 2. In dieser Matrix sind zwei Zeilen mit Abschaltbedingungen zu sehen, nämlich zum Einen die gesicherte Tür T, deren Betätigung zum Abschalten der Elemente des Schutzkreises SK führen soll, und als nächstes den Not-Aus-Kreis NA, zu dem der Schutzkreis SK gehört. Als dritte Sicherheitsmatrix BM-M ist die Matrix des Betriebsmittels BM dargestellt, in denen sowohl der Scanner S, als auch der Schutzkreis SK als Abschaltbedingung verzeichnet sind.

Es können also jeder Hierarchie-Ebene bzw. Sicherheitsmatrix Ein- und Ausschaltfunktionen zugeordnet werden; im Beispiel werden jedoch aus Gründen der Übersichtlichkeit nur Ausschaltfunktionen gezeigt. Dabei soll der "effect" der überlagerten Hierarchie-Ebene bzw. der überlagerten Sicherheitsmatrix als "cause" der untergelagerten Sicherheitsmatrix automatisch zugeordnet werden. Dies ist in der Figur 3 anhand der Pfeile dargestellt. Auf Anlagenebene (vgl. Ebene A-E in der Figur 1) schaltet ein Hauptschalter die komplette Anlage ab. Auf der Not-Aus-Kreis-Ebene wird die sichere Abschaltung eines Teilbereichs (hier z.B. die Anlage aus Fig. 2) durch Not-Halt-Taster bewirkt. Auf der Schutzkreisebene findet die sichere Abschaltung eines Arbeitsbereichs durch Zugangstüren, Sicherheitslichtschranken, Scanner etc. statt. Auf der Einlegestellenebene (siehe Ebene ES-E in der Figur 1) kann die sichere Abschaltung mehrerer für eine Person gefährlicher Aggregate vorgesehen werden. Auf der Aggregate-Ebene bzw. Betriebsmittel-Ebene (Ebene AG-E in Figur 1) kann die gezielte Abschaltung einzelner Aggregate während des Betriebs zur Absicherung einer Person vorgenommen werden, beispielsweise durch Sperrung eines Hubwerks, falls eine Laufkatze nicht in einer definierten Position ist. Schließlich stellt die Aktoren-Ebene (Ebene AK-E der Figur 1) das letzte Glied der Kette dar, wobei durch die Aktoren AKT1, AKT2, AKT3 beispielsweise Lastspannungen sicher abgeschaltet werden o.ä.. Typische Aktoren sind Schütze, Trenn-Schalter und dergleichen.

In der Figur 4 ist die Gesamtmatrix GM abgebildet, die sich aus der automatischen Kombination der Sicherheitsmatrizen NA-M, SK-M, BM-M der Figur 3 ergibt. Dabei ist die Sicherheitsmatrix NA-M in die Sicherheitsmatrix SK-M eingefügt worden, wonach das Resultat wiederum in die Sicherheitsmatrix BM-M eingefügt wurde. Man spricht dabei auch von einem Top-Down-Vorgehen. Die Verknüpfungen ("cause" - "effect") sind in der Gesamtmatrix GM wieder jeweils als "X" dargestellt. Die Verknüpfungen in den letzten beiden Spalten, die in der Figur 4 als "generierte Hilfslogik" GHL markiert sind, sind dabei automatisch erzeugt worden und für das Steuerungsprogramm nicht relevant. Die GHL-Spalten der generierten Hilfslogik GHL erleichtern das Projektieren und die Lesbarkeit der GM und können für Dokumentationszwecke genutzt werden, da sie die Zuordnung zu den jeweiligen Hierarchien aufzeigen. Der zur Laufzeit notwendige und optimale Code wird hier aus der Spalte BM kompiliert. Für die Generierung der Gesamtmatrix GM ist die Regel angewendet worden, dass der "effect" einer überlagerten Ebene alle davon abhängigen untergeordneten Ebenen als "cause" erreicht, aber nicht umgekehrt. So ist die ursprünglich übergeordnete Ebene des Not-Aus-Kreises in der Gesamtmatrix als letzte Zeile ausgefüllt, wobei durch die drei Verknüpfungen ausgedrückt wird, dass mit Betätigung des Not-Halt-Tasters sowohl der Schutzkreis SK als auch das Betriebsmittel BM ebenfalls in einen sicheren Zustand überführt werden müssen. Umgekehrt schaltet eine Betätigung des Scanners S zwar das Betriebsmittel BM ab, führt aber nicht zur Betätigung des übergeordneten Not-Aus-Kreises NA, dem möglicherweise (nicht dargestellt) noch weitere Betriebsmittel BM zugeordnet sein können, die nicht durch den Scanner S abgesichert sind und daher bei Auslösen des Scanners S nicht abgeschaltet werden sollen.

Grundsätzlich ist durch die vorgenannte Vorgehensweise die generische, automatische Erzeugung eines sicherheitsgerichteten Programms auch über mehrere Controller einer Automatisierungsanordnung hinweg möglich. Durch die einmalige Erzeugung einfacher Sicherheitsmatrizen, wie anhand Fig. 3 gezeigt, kann eine Typisierung von Betriebsmitteln bzw. Aggregaten erfolgen. Bereits validierte Komponenten können so als Teil einer Bibliothek für mehrere Projekte verwendet werden. Dies vereinfacht auch einen späteren Abnahmeprozess durch Behörden etc.. Die Abschaltung eines einzelnen Betriebsmittels oder eines einzelnen Sicherheitskreises (Schutzkreises) kann übersichtlich in einer kleinen Sicherheitsmatrix projektiert und danach verschiedenen Schutzkreisen zugeordnet werden. Dies geschieht über die Aktivierung eines "causes" aus der entsprechenden überlagerten Hierarchie-Ebene bzw. überlagerten Sicherheitsmatrix. Änderungen wie Hinzufügen oder Löschen von Abhängigkeiten werden einfach in der gesamten Sicherheitsmatrix GM durchgeführt. Im Ergebnis ergibt sich eine gut lesbare und leicht nachvollziehbare Darstellung der komplexen sicherheitsgerichteten Einrichtung, die sowohl zur übersichtlichen Darstellung der Abhängigkeiten verwendbar ist, als auch von einer geeigneten Software-Komponente (z.B. Plug-In eines Programmiergerätes) automatisch in ein sicherheitsgerichtetes Programm für einen oder mehrere Controller umgesetzt werden kann.

## Patentansprüche

1. Verfahren zur logischen Verschaltung von zumindest zwei Schutzkreisen (NA, SK) in einer industriellen Automatisierungsanordnung (A-A),
**dadurch gekennzeichnet,**
**dass** ein untergeordneter der Schutzkreise (NA, SK) und ein übergeordneter der Schutzkreise (NA, SK) jeweils in einer Sicherheitsmatrix (NA-M, SK-M) beschrieben wird,
wobei aus den Sicherheitsmatrizen (NA-M, SK-M) des untergeordneten und des übergeordneten Schutzkreises (NA, SK) eine Gesamtmatrix (GM) generiert wird, wobei die Gesamtmatrix (GM) die Verschaltung der Schutzkreise (NA, SK) angibt.

2. Verfahren nach Patentanspruch 1,
**dadurch gekennzeichnet,**
**dass** zur Generierung der Gesamtmatrix (GM) die Sicherheitsmatrix (NA-M, SK-M) des untergeordneten Schutzkreises (NA, SK) zusammen mit den in dieser enthaltenen Verknüpfungen (X) in die Sicherheitsmatrix (NA-M, SK-M) des übergeordneten Schutzkreises (NA, SK) eingefügt wird.

3. Verfahren nach einem der vorherigen Patentansprüche,
**dadurch gekennzeichnet,**
**dass** die Schutzkreise (NA, SK) in einer Projektbeschreibung der industriellen Automatisierungsanordnung (A-A) verzeichnet sind,
wobei die Hierarchie der Schutzkreise (NA, SK) und die Hierarchie der Sicherheitsmatrizen (NA-M, SK-M) aus einer Ressourcen- und/oder einer Gruppenhierarchie in der Projektbeschreibung ausgelesen wird.

4. Verfahren nach Patentanspruch 3,
**dadurch gekennzeichnet,**
**dass** als die Projektbeschreibung eine Darstellung der industriellen Automatisierungsanordnung (A-A) in Form einer Baumstruktur verwendet wird.

5. Verfahren nach einem der vorhergehenden Patentansprüche,
**dadurch gekennzeichnet,**
**dass** für jede der Sicherheitsmatrizen (NA-M, SK-M) ein mit einer Auslösebedingung verknüpfter Effekt definiert wird, wobei in der Gesamtmatrix (GM) jeweils der Effekt einer ursprünglich übergeordneten Sicherheitsmatrix (NA-M, SK-M) als auslösendes Ereignis auf eine dieser untergeordneten Sicherheitsmatrix (NA-M, SK-M) wirkt.

6. Verfahren nach einem der vorhergehenden Patentansprüche,
**dadurch gekennzeichnet,**
**dass** die Gesamtmatrix (GM) zur Erzeugung eines sicherheitsgerichteten Programms für die industrielle Automatisierungsanordnung (A-A) und/oder zur Darstellung der sicherheitstechnischen Abhängigkeiten in der industriellen Automatisierungsanordnung (A-A) verwendet wird.

7. Verfahren nach einem der vorherigen Patentansprüche,
**dadurch gekennzeichnet,**
**dass** eine Hilfslogik (GHL) in der Gesamtmatrix (GM) generiert wird.

8. Verfahren nach Patentanspruch 7,
**dadurch gekennzeichnet,**
**dass** die Hilfslogik (GHL) für Dokumentationszwecke genutzt wird.

9. Projektierungseinrichtung für eine industrielle Automatisierungsanordnung,
**dadurch gekennzeichnet,**
**dass** die Projektierungseinrichtung zur teil- oder vollautomatisierten Durchführung eines der vorgenannten Verfahren eingerichtet ist.

10. Projektierungseinrichtung nach Anspruch 9,
**dadurch gekennzeichnet,**
**dass** sie als Software-Komponente eines Programmiergerätes für die industrielle Automatisierungsanordnung (A-A) ausgebildet ist.

## Claims

1. Method for logical connection of at least two protection circuits (NA, SK) in an industrial automation arrangement (A-A),
**characterized**
**in that** a subordinate one of the protection circuits (NA, SK) and a superordinate one of the protection circuits (NA, SK) are each described in a safety matrix (NA-M, SK-M),
wherein an overall matrix (GM) is generated from the safety matrices (NA-M, SK-M) of the subordinate and of the super-ordinate protection circuits (NA, SK), wherein the overall matrix (GM) indicates the connection of the protection circuits (NA, SK).

2. Method according to Patent Claim 1,
**characterized**
**in that**, in order to generate the overall matrix (GM), the safety matrix (NA-M, SK-M) of the subordinate protection circuit (NA, SK) is inserted together with the logic links (X) contained therein into the safety matrix (NA-M, SK-M) of the super-ordinate protection circuit (NA, SK).

3. Method according to one of the preceding patent claims,
**characterized**
**in that** the protection circuits (NA, SK) are recorded in a project description of the industrial automation arrangement (A-A),
wherein the hierarchy of the protection circuits (NA, SK) and the hierarchy of the safety matrices (NA-M, SK-M) are read from a resource hierarchy and/or a group hierarchy in the project description.

4. Method according to Patent Claim 3,
**characterized**
**in that** a representation of the industrial automation arrangement (A-A) in the form of a tree structure is used as the project description.

5. Method according to one of the preceding patent claims,
**characterized**
**in that** an effect which is linked to an initiating condition is defined for each of the safety matrices (NA-M, SK-M), wherein the effect of an originally superordinate safety matrix (NA-M, SK-M) in the overall matrix (GM) in each case acts as an initiating event on a safety matrix (NA-M, SK-M) which is subordinate to it.

6. Method according to one of the preceding patent claims,
**characterized**
**in that** the overall matrix (GM) is used to produce a safety-related program for the industrial automation arrangement (A-A) and/or to represent the safety relationships in the industrial automation arrangement (A-A).

7. Method according to one of the preceding patent claims,
**characterized**
**in that** auxiliary logic (GHL) is generated in the overall matrix (GM).

8. Method according to Patent Claim 7,
**characterized**
**in that** the auxiliary logic (GHL) is used for documentation purposes.

9. Configuration device for an industrial automation arrangement,
**characterized**
**in that** the configuration device is designed to carry out one of the abovementioned methods partially or fully automatically.

10. Configuration device according to Claim 9,
**characterized**
**in that** the configuration device is in the form of a software component of a programmer for the industrial automation arrangement (A-A).

## Revendications

1. Procédé de liaison logique d'au moins deux circuits (NA, SK) de protection dans un agencement (A-A) d'automatisation industriel,
**caractérisé,**
**en ce qu'**on décrit respectivement dans une matrice NA-M, SK-M) de sécurité l'un subordonné hiérarchiquement des circuits (NA, SK) de protection et l'un supérieur hiérarchiquement des circuits (NA, SK) de protection,
dans lequel on produit, à partir des matrices (NA-M, SK-M) de sécurité du circuit (NA, SK) de protection subordonné hiérarchiquement et du circuit (NA, SK) de protection supérieur hiérarchiquement, une matrice (GM) générale, la matrice (GM) générale indiquant la liaison des circuits (NA, SK) de protection.

2. Procédé suivant la revendication 1,
**caractérisé,**
**en ce que**, pour produire la matrice (GM) générale, on insère la matrice (NA-M, SK-M) de sécurité du circuit (NA, SK) de protection subordonné hiérarchiquement ensemble avec les éléments logiques (X) qui y sont contenus dans la matrice (NA-M, SK-M) de sécurité du circuit (NA, SK) de protection supérieur hiérarchiquement.

3. Procédé suivant l'une des revendications précédentes,
**caractérisé,**
**en ce qu'**on énumère les circuits (NA, SK) de protection dans une description de projet de l'agencement (A-A) d'automatisation industrielle,
la hiérarchie des circuits (NA, SK) de protection et la hiérarchie des matrices (NA-M, SK-M) de sécurité étant lues dans la description du projet à partir d'une hiérarchie de ressource set/ou d'une hiérarchie de groupes.

4. Procédé suivant la revendication 3,
**caractérisé,**
**en ce qu'**on utilise comme description du projet une représentation de l'agencement (A-A) d'automatisation industrielle sous la forme d'une structure arborescente.

5. Procédé suivant l'une des revendications précédentes,
**caractérisé,**
**en ce que**, pour chacune des matrices (NA-M, SK-M) de sécurité, on définit un effet combiné à une condition de déclenchement, l'effet d'une matrice (NA-M, SK-M) de sécurité supérieure hiérarchiquement à l'origine agissant respectivement dans la matrice (GM) générale comme événement déclenchant sur une matrice (NA-M, SK-M) de sécurité subordonnée hiérarchiquement à celle-ci.

6. Procédé suivant l'une des revendications précédentes,
**caractérisé,**
**en ce qu'**on utilise la matrice (GM) générale pour la production d'un programme de sécurité pour l'agencement (A-A) d'automatisation industriel et/ou pour la représentation des relations de sécurité dans l'agencement (A-A) d'automatisation industriel.

7. Procédé suivant l'une des revendications précédentes,
**caractérisé,**
**en ce qu'**on produit une logique (GHL) auxiliaire dans la matrice (GM) générale.

8. Procédé suivant la revendication 7,
**caractérisé,**
**en ce qu'**on utilise la logique (GHL) auxiliaire à des fins de documentation.

9. Dispositif pour établir un projet d'un agencement d'automatisation industriel,
**caractérisé,**
**en ce que** le dispositif d'établissement d'un projet est conçu pour effectuer d'une manière entièrement automatique ou partiellement automatique l'un des procédés mentionnés ci-dessus.

10. Dispositif pour établir un projet suivant la revendication 9,
**caractérisé,**
**en ce qu'**il est constitué en composant le logiciel d'un appareil de programmation pour l'agencement (A-A) d'automatisation industriel.
